# EUROPÄISCHE PATENTANMELDUNG

(11) **EP 0 666 110 A1**
(43) Veröffentlichungstag der Anmeldung: **09.08.1995**
(21) Anmeldenummer: 95100392.0
(22) Anmeldetag: 13.01.1995
(51) Int. Cl.: B01L 3/02, G01F 23/24

(54) **Kunststoffpipette mit Levelsensorfunktion**

(30) Priorität: 29.01.1994 DE 4402654
(71) Anmelder: BEHRINGWERKE Aktiengesellschaft, 35001 Marburg (DE)
(72) Erfinder: Pufahl, Holger, Dr., D-65835 Liederbach/Ts. (DE); Schleicher, Martin, D-61381 Friedrichsdorf (DE); Padberg, Peter, D-65232 Taunusstein-Bleidenstadt (DE)

(57) **Zusammenfassung**

Die vorliegende Erfindung bezieht sich auf eine Pipette mit einem Pipettenkörper (2) und einem Pipettenkolben (1), wobei diese Pipette als Flüssigkeitsdetektor/Levelsensor verwendbar ist.

## Beschreibung

Die vorliegende Erfindung bezieht sich auf eine Pipette mit einem Pipettenkörper und einem Pipettenkolben, wobei diese Pipette als Flüssigkeitsdetektor/Levelsensor verwendbar ist.

Solche Pipetten werden in modernen Analyseautomaten verwendet, um z. B. Proben oder Reagenzien zu pipettieren. Aus dem Fachmann bekannten Gründen kann es dabei notwendig sein, die Pipetten mehrfach auszuwechseln, z. B. wenn unterschiedliche Reagenzien pipettiert werden.

Da der Flüssigkeitsstand in den Reagenzbehältern sich naturgemäß verändert und andererseits auch die Pipette nur soweit wie unbedingt nötig in das Reagenz eintauchen soll, ist es vorteilhaft, solche Pipetten mit einer Levelsensorfunktion zu kombinieren.

In der EP-A-0 226 867 wird eine solche Pipette beschrieben. Die Levelsensorfunktion wird dabei von einem leitfähig gemachten Pipettenkolben bzw. -körper übernommen. Die Ausführung einer solchen Pipette besteht in der Regel aus zwei unterschiedlichen Materialien z. B. Polypropylen (PP) und Polyethylen (PE). Diesen Materialien wird nach Bedarf ein Gleitmittel in Form von z. B. Ölsäureamid zugegeben, damit ein gutes Gleiten zwischen Pipettenkolben- und körper erreicht wird. Um eine genaue Volumenaufnahme- und abgabe zu erzielen, wird der Körper bevorzugt aus dem mechanisch stabileren Material (PP) hergestellt. Da die Leitfähigkeit z. B. durch Einlagerung von Graphit in den Kunststoff erreicht wird, ist es naheliegend, den Pipettenkolben aus dem leitfähigen Material herzustellen, damit die Möglichkeit der optischen Kontrolle der in die Pipette aufgesaugten Flüssigkeit nicht durch die Einfärbung des Pipettenköpers beeinträchtigt wird.

Konstruktionsbedingt besitzen solche Pipetten mindestens eine Dichtlippe, die mit den zu pipettierenden Medien in Kontakt kommt.

Setzt man eine solche Pipette in Analyseautomaten, wie sie z. B. in der medizinischen Diagnostik verwendet werden, ein, so kommen diese Pipetten überwiegend mit Lösungen in Kontakt, die unter anderem Detergenzien enthalten. Durch diese Detergenzien wird in kurzer Zeit die Gleitschicht abgewaschen, was zur Folge hat, daß die Gleiteigenschaften zwischen dem Pipettenkolben und dem Pipettenkörper stark gestört werden. Die damit sprunghaft erhöhte Haft- bzw. Gleitreibung führt zu unkontrollierten, stoßartigen Ausflußgeschwindigkeiten bei der Abgabe von Flüssigkeiten aus der Spritze. Dadurch können Teile der zu transferierenden Flüssigkeiten unkontrolliert herumspritzen, was zu falschen Dosierungen führt.

Es ist außerdem bekannt, daß die Verarbeitung des leitfähig gemachten Kunststoffes aufwendiger und teurer als solcher ohne Zusätze ist. Ferner ist es für das Stoffrecycling in der Regel nachteilig, Gemische verschiedener Stoffe zu verwenden.

Eine weitere Lösungsmöglichkeit wird in der französischen Patentanmeldung Nr. 2.060.965 beschrieben. Hier wird die Levelsensorfunktion durch einen starr mit der Pipettenspitze gekoppelten Sensordraht ausgeführt. Auch wenn diese Anordnung grundsätzliche ihre Funktion erfüllte, erweist sie sich in der Praxis als unpraktikabel, insbesondere, wenn in Analyseautomaten die Pipetten ausgewechselt werden müssen.

Die der vorliegenden Erfindung zugrunde liegende Aufgabe bestand also darin, eine Pipette zu finden, die die Vorteile der integrierten Levelsensorfunktion aufweist, ohne die Nachteile der beschriebenen Lösungen zu zeigen.

Gelöst wurde diese Aufgabe dadurch, daß auf den Pipettenkörper eine leitfähige Elektrode aufgebracht wird. Als Materialien geignet sind dem Fachmann an sich bekannte Materialen wie Metalle, Leitlacke, organische Leiter oder stark kohlenstoffhaltige Produkte. Diese Materialien können dabei in Abhängigkeit von den Materialien nach dem Fachmann an sich bekannten Verfahren direkt auf den Pipettenkörper aufgebracht werden. Als Beispiele für solche Verfahren seien genannt: aufdampfen, durch Siebdruck aufbringen oder kleben.

Bevorzugt wird ein Verfahren, bei dem durch Siebdruck eine Elektrode aus Leitlack aufgebracht wird.

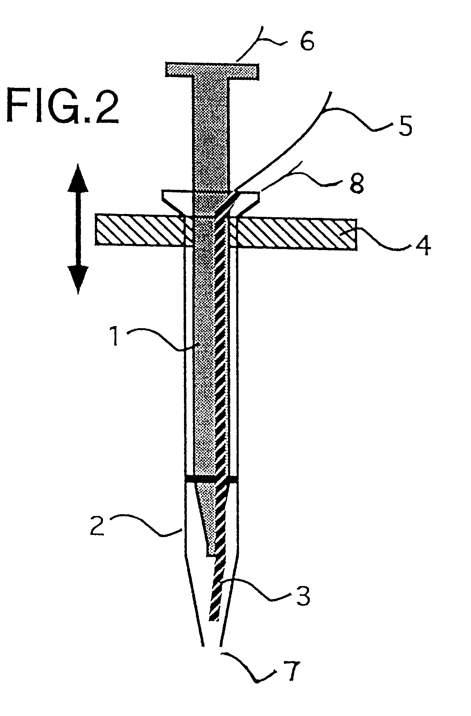

Die Elektrode kann über die ganze Länge des Pipettenkörpers aufgebracht werden, wobei die Pipettenspitze, die in die zu pipettierende Flüssigkeit eintaucht, entweder vollständig (siehe Fig. 2) oder nur bis kurz (bevorzugterweise 1 - 2 mm) vor dem unteren Endabschnitt mit der Elektrode versehen ist.

Verfahren zur Ableitung eines Signals von der Elektrode sind dem Fachmann an sich bekannt und so können Ableitungselektroden z. B. in die Halterung (4) des Pipettenkörpers integriert sein.
Figur 1: Ansicht eines Ausführungsbeispiels einer erfindungsgemäßen Pipette, wobei die aufgebrachte Elektrode bis an den unteren Endabschnitt (7) des Pipettenkörpers reicht;
Figur 2: Ausführungsbeispiel, wobei die aufgebrachte Elektrode bis kurz vor den unteren Endabschnitt (7) des Pipettenkörpers reicht.

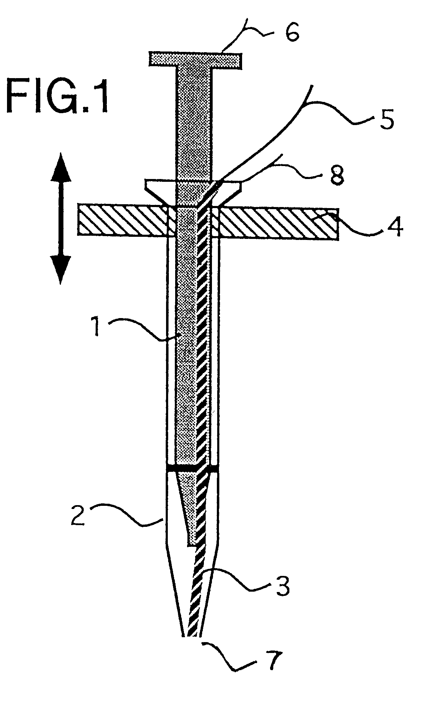

Die Pipette nach Figur 1 und 2 besteht aus einem Pipettenkörper (2) mit einem unteren Endabschnitt (7) und einem Pipettenkolben (1). Der Pipettenkolben (1) weist bevorzugterweise einen im wesentlichen scheibenförmigen Endabschnitt (6) auf, an dem der Pipettenkolben (2) mit Hilfe einer Aufnahmevorrichtung in einem Analyseautomaten manipuliert werden kann. Der Pipettenkörper (2) weist bevorzugterweise einen überwiegend scheibenförmigen Endabschnitt (8) auf, der zur Manipulation in dem Analyseautomaten dient, der Pipettenkörper (2) kann durch einen Träger (4) gehalten werden, die Elektrode (3) ist auf den Pipettenkörper (2) aufgebracht und das Signal wird über die Zuleitung (5), die auch in den Pipettenträger (4) integriert sein kann, abgeleitet.

## Patentansprüche

1. Eine Pipette dadurch gekennzeichnet, daß auf den Pipettenkörper (2) eine leitfähige Elektrode (3) aufgebracht ist.

2. Eine Pipette nach Anspruch 1, wobei die Elektrode bis an den unteren Endabschnitt (7) des Pipettenkörpers (2) geht.

3. Eine Pipette nach Anspruch 1, wobei die Elektrode (3) bis kurz, bevorzugterweise 1 - 2 mm vor den unteren Endabschnitt (7) des Pipettenkörpers (2) geht.

4. Die Verwendung einer Pipette nach einem der Ansprüche 1 - 3 in einem Analyseautomaten.

5. Die Verwendung nach Anspruch 4, wobei der Analyseautomat zur Bestimmung diagnostisch relevanter Paramater eingesetzt wird.
